(19) **Europäisches Patentamt European Patent Office Office européen des brevets**

(11) **EP 4 448 361 B1**

(12) **FASCICULE DE BREVET EUROPÉEN**

(45) Date de publication et mention de la délivrance du brevet:
**24.12.2025 Bulletin 2025/52**

(21) Numéro de dépôt: **22813682.6**

(22) Date de dépôt: **16.11.2022**

(51) Classification Internationale des Brevets (IPC):
***B60W 30/14*** *(2006.01)*

(52) Classification Coopérative des Brevets (CPC):
**B60W 30/14;** B60W 2520/10; B60W 2520/105; B60W 2720/106

(86) Numéro de dépôt international:
**PCT/FR2022/052103**

(87) Numéro de publication internationale:
**WO 2023/111412 (22.06.2023 Gazette 2023/25)**

(54) **PROCÉDÉ ET DISPOSITIF DE CONTRÔLE D'ACCÉLÉRATION D'UN VÉHICULE**

VERFAHREN UND VORRICHTUNG ZUR STEUERUNG DER BESCHLEUNIGUNG EINES FAHRZEUGS

METHOD AND DEVICE FOR CONTROLLING THE ACCELERATION OF A VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **13.12.2021 FR 2113352**

(43) Date de publication de la demande:
**23.10.2024 Bulletin 2024/43**

(73) Titulaire: **Stellantis Auto SAS**
**78300 Poissy (FR)**

(72) Inventeurs:
• **VIVET, Luc**
**75016 PARIS 16 (FR)**
• **KOUBACHI, Mouad**
**BENI MELLAL, 23000 (MA)**

(74) Mandataire: **ESIP**
**Stellantis Auto SAS**
**Service REIP - YT800**
**43, rue Jean Pierre Timbaud**
**78300 Poissy (FR)**

(56) Documents cités:
**DE-A1- 102012 007 197    US-A1- 2010 250 087**
**US-A1- 2018 237 011**

## Description

### Domaine technique

L'invention concerne les procédés et dispositifs de contrôle d'accélération d'un véhicule, notamment un véhicule automobile. L'invention concerne également un procédé et un dispositif de contrôle d'un véhicule, notamment un contrôle d'un système de régulation adaptative de vitesse d'un véhicule.

### Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Ces informations d'environnement correspondent par exemple à la distance entre le véhicule équipé du système ACC et un véhicule circulant devant, à la vitesse (par exemple relative) du véhicule circulant devant, à l'accélération (ou à la décélération) du véhicule circulant devant et/ou à une vitesse limite réglementaire. Un tel véhicule circulant devant est appelé véhicule cible ou objet cible du système ACC. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Lorsque le véhicule embarquant le système ACC perd le véhicule cible, par exemple en cas de dysfonctionnement des capteurs embarqués ou lorsque la trajectoire du véhicule cible change, l'accélération du véhicule dont la vitesse est régulée par le système ACC risque d'être importante, voire brutale. Ceci entraine un risque d'inconfort des passagers, voire un risque d'accident si le véhicule cible est toujours devant le véhicule embarquant le système ACC.

En outre, l'état de la technique est connu des documents US2018237011A1 et US2010250087A1.

### Résumé de l'invention

Un objet de la présente invention est de résoudre au moins l'un des problèmes de l'arrière-plan technologique décrit précédemment.

Un autre objet de la présente invention est d'améliorer le fonctionnement d'un système ACC d'un véhicule.

Selon un premier aspect, l'invention concerne un procédé de contrôle d'accélération d'un premier véhicule, le premier véhicule comprenant un système de régulation adaptative de vitesse, dit système ACC, le procédé comprenant les étapes suivantes postérieures à une désélection d'un deuxième véhicule comme véhicule cible du système ACC :

    a) détermination d'une valeur représentative d'une variation d'accélération courante, dite valeur de secousse courante, en fonction d'une vitesse courante du premier véhicule et d'une valeur d'accélération, dite valeur d'accélération précédente, obtenue du système ACC à un instant précédant l'instant courant ;

    b) détermination d'une valeur d'accélération courante du système ACC en fonction de la valeur de secousse courante et de la valeur d'accélération précédente ;

    c) contrôle d'accélération du premier véhicule en fonction de la valeur d'accélération courante.

Un tel procédé permet de filtrer ou d'ajuster l'accélération calculée par le système ACC en fonction d'une valeur de secousse qui dépend notamment de la vitesse du premier véhicule. La fonction entre la valeur de secousse et la vitesse du premier véhicule permet de déterminer une valeur de secousse qui atténue l'accélération du premier véhicule. Une telle atténuation est particulièrement utile lorsque le véhicule cible du système ACC est perdu ou désélectionné, par exemple en cas de problème des capteurs du premier véhicule, d'un problème d'analyse des données d'environnement par le système ACC ou d'un changement de trajectoire du véhicule qui correspondait jusqu'alors au véhicule cible.

Selon une variante, la valeur de secousse courante correspond à :

- une première valeur de secousse lorsque lorsque la valeur d'accélération précédente est strictement inférieure à 0, la première valeur de secousse étant selon une première fonction de la vitesse du premier véhicule ; ou
- une deuxième valeur de secousse lorsque lorsque la valeur d'accélération précédente est supérieure ou égale à 0, la deuxième valeur de secousse étant selon une deuxième fonction de la vitesse du premier véhicule.

Selon une autre variante, la première valeur de secousse est :

- égale à une première valeur de secousse minimale pour toute vitesse du premier véhicule comprise entre 0 et une première vitesse minimale,
- suivant une fonction croissante de la vitesse du premier véhicule lorsque la vitesse du premier véhicule est comprise entre la première vitesse minimale et une première vitesse maximale du premier véhicule, la première vitesse maximale étant supérieure à la première vitesse minimale, et
- égale à une première valeur de secousse maximale pour toute vitesse du premier véhicule supérieure à la première vitesse maximale ;

et la deuxième valeur de secousse est :

- égale à une deuxième valeur de secousse minimale pour toute vitesse du premier véhicule comprise entre 0 et une deuxième vitesse minimale, la deuxième valeur de secousse minimale étant inférieure à la première valeur de secousse minimale,
- suivant une fonction croissante de la vitesse du premier véhicule lorsque la vitesse du premier véhicule est comprise entre la deuxième vitesse minimale et une deuxième vitesse maximale du premier véhicule, la deuxième vitesse maximale étant supérieure à la deuxième vitesse minimale, et
- égale à une deuxième valeur de secousse maximale pour toute vitesse du premier véhicule supérieure à la deuxième vitesse maximale, la deuxième valeur de secousse maximale étant inférieure à la première valeur de secousse maximale.

Selon une variante supplémentaire, la valeur d'accélération courante du système ACC vaut :

$$A(t) = A(t\text{-}dt) + J(V)^*dt,$$

avec A(t) la valeur d'accélération courante, A(t-dt) la valeur d'accélération précédente, dt l'intervalle temporel séparant l'instant précédent et l'instant courant, J(V) la valeur de secousse fonction de la vitesse V du premier véhicule.

Selon encore une variante, les étapes a), b) et c) sont réitérées pendant une durée déterminée à compter d'un instant temporel correspondant à la désélection du deuxième véhicule.

Selon une variante additionnelle, la durée déterminée est égale à 2 secondes.

Selon un deuxième aspect, l'invention concerne un dispositif de contrôle d'accélération d'un véhicule, le dispositif comprenant une mémoire associée à un processeur configuré pour la mise en œuvre des étapes du procédé selon le premier aspect de l'invention.

Selon un troisième aspect, l'invention concerne un véhicule, par exemple de type automobile, comprenant le dispositif tel que décrit ci-dessus selon le deuxième aspect de l'invention.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect non revendiquée, l'invention peut concerner un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

Brève description des figures

D'autres caractéristiques et avantages de l'invention ressortiront de la description des modes de réalisation non limitatifs de l'invention ci-après, en référence aux figures 1 à 5 annexées, sur lesquelles :

[Fig. 1] illustre schématiquement un premier véhicule et un deuxième véhicule, selon un exemple de réalisation particulier de la présente invention ;

[Fig. 2] illustre des fonctions représentant l'évolution d'une valeur de secousse en fonction de la vitesse du premier véhicule de la figure 1, selon un exemple de réalisation particulier de la présente invention ;

[Fig. 3] illustre un diagramme représentant l'évolution de l'accélération en fonction du temps déterminée par un système ACC embarqué dans le premier véhicule de la figure 1, selon un exemple de réalisation particulier de la présente invention ;

[Fig. 4] illustre schématiquement un dispositif configuré pour contrôler l'accélération du premier véhicule de la figure 1, selon un exemple de réalisation particulier de la présente invention.

[Fig. 5] illustre un organigramme des différentes étapes d'un procédé de contrôle de l'accélération du premier véhicule de la figure 1, selon un exemple de réalisation particulier de la présente invention.

## Description des modes de réalisation

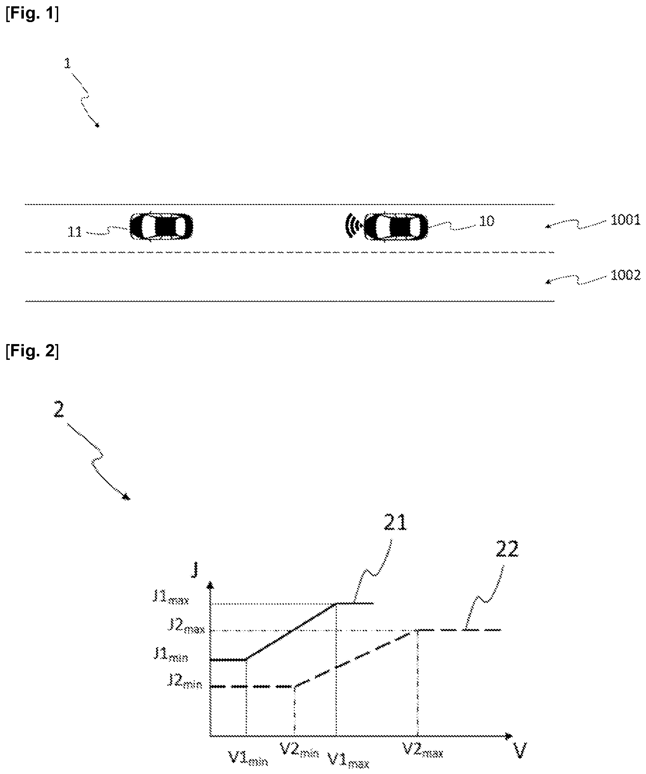

Un procédé et un dispositif de contrôle de l'accélération d'un véhicule vont maintenant être décrits dans ce qui va suivre en référence conjointement aux figures 1 à 5. Des mêmes éléments sont identifiés avec des mêmes signes de référence tout au long de la description qui va suivre.

Selon un exemple particulier et non limitatif de réalisation de l'invention, un calculateur, par exemple le calculateur en charge de contrôler le système ACC d'un premier véhicule, détermine une valeur d'accélération (correspondant à une valeur d'accélération potentielle ou à une valeur d'accélération brute) à un instant courant en fonction d'une valeur de secousse (de l'anglais « jerk », aussi appelée valeur d'à-coup) courante. Cette valeur de secousse est avantageusement déterminée en fonction de la vitesse courante du premier véhicule et d'une valeur d'accélération, dite précédente, déterminée par le système ACC à un instant précédant l'instant courant, par exemple en fonction du signe, positif ou négatif, de la valeur d'accélération précédente. L'accélération du premier véhicule est alors contrôlée en fonction de la valeur d'accélération courante déterminée.

Une valeur de secousse correspond avantageusement à une grandeur représentant une variation de l'accélération dans le temps, exprimée en $m.s^{-3}$.

Un tel procédé permet de filtrer ou d'ajuster l'accélération calculée par le système ACC en fonction d'une valeur de secousse qui dépend notamment de la vitesse du premier véhicule. La fonction entre la valeur de secousse et la vitesse du premier véhicule permet de déterminer une valeur de secousse qui atténue l'accélération du premier véhicule. Une telle atténuation est particulièrement utile lorsque le véhicule cible du système ACC est perdu ou désélectionné, par exemple en cas de problème des capteurs du premier véhicule, d'un problème d'analyse des données d'environnement par le système ACC ou d'un changement de trajectoire du véhicule qui correspondait jusqu'alors au véhicule cible.

Un tel ajustement permet d'améliorer la sécurité du premier véhicule et le confort de ses passagers en atténuant l'accélération en fonction d'une valeur de secousse, notamment lorsque le véhicule cible a été désélectionné par erreur et qu'il se trouve toujours devant le premier véhicule.

La figure 1 illustre schématiquement un premier véhicule 10 suivant un deuxième véhicule 11 sur une portion de route d'un environnement 1, selon un exemple de réalisation particulier et non limitatif de la présente invention.

La figure 1 illustre un premier véhicule 10, par exemple un véhicule automobile, embarquant un ou plusieurs capteurs configurés pour détecter la présence d'objets dans l'environnement 1 du premier véhicule 10. Selon d'autres exemples, le premier véhicule 10 correspond à un car, un bus, un camion, un véhicule utilitaire ou une motocyclette, c'est-à-dire à un véhicule de type véhicule terrestre motorisé.

Le premier véhicule 10 correspond à un véhicule circulant sous la supervision totale d'un conducteur ou circulant dans un mode autonome ou semi-autonome. Le premier véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le premier véhicule 10 circule sur une portion de route à deux voies de circulations 1001, 1002. Le premier véhicule 10 circule par exemple sur la voie de circulation de droite 1001, les deux voies de circulation 1001 et 1002 étant selon un même sens de circulation. Selon une variante, la voie de circulation 1001 est selon un sens de circulation et la voie de circulation 1002 selon le sens inverse de circulation.

Selon l'exemple de la figure 1, le premier véhicule 10 suit un deuxième véhicule 11, à une distance déterminée et pouvant varier dans le temps (en fonction du comportement dynamique du premier véhicule 10 et du deuxième véhicule 11), le deuxième véhicule 11 circulant sur la même voie de circulation 1001 que le premier véhicule 10 et dans la même direction que le premier véhicule 10.

Le deuxième véhicule 11 correspond à l'objet cible (aussi appelé véhicule cible) sélectionné par le système ACC du premier véhicule 10, au moins pendant un intervalle de temps jusqu'à ce que le deuxième véhicule soit désélectionné en tant que véhicule cible du système ACC. La désélection est par exemple mise en œuvre par le système ACC, par exemple lorsque les capteurs du premier véhicule 10 ne détecte plus la présence du deuxième véhicule 11 ou lors d'une erreur d'interprétation des données reçues de ces capteurs par le système ACC.

Le premier véhicule 10 embarque par exemple un ou plusieurs des capteurs suivants :

- un ou plusieurs radars à ondes millimétriques arrangés sur le premier véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le deuxième véhicule 11 situé devant le premier véhicule 10 selon l'exemple de la figure 1), dans le but de détecter des obstacles et leurs distances vis-à-vis du premier véhicule 10 ; et/ou
- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le deuxième véhicule 11) situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du premier véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le deuxième véhicule 11, et d'en déduire un ou plusieurs paramètres dynamiques de l'objet mobile tels que la vitesse et/ou l'accélération. Ces données permettent également de déterminer les lignes au sol pour par exemple participer à la détermination d'appartenance du deuxième véhicule 11 et du premier véhicule 10 à une même voie de circulation par exemple.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le premier véhicule 10. Un tel système ADAS est configuré pour assister, voire remplacer, le conducteur du premier véhicule 10 pour contrôler le premier véhicule 10 sur son parcours.

Le premier véhicule 10 embarque avantageusement un système ADAS correspondant à un système de régulation automatique de la vitesse, dit système ACC. Lorsque le système ACC est activé, le système ACC a pour objectif de réaliser une accélération de consigne, notée A(t) (aussi appelée accélération de consigne brute ou accélération potentielle), qui varie au cours du temps 't' et qui permet de maintenir une distance de sécurité déterminée vis-à-vis du deuxième véhicule 11 en amont du premier véhicule 10, c'est à dire d'un véhicule cible circulant devant le premier véhicule 10 dans le même sens de circulation sur la même voie de circulation tant que ce deuxième véhicule 11 est détecté par les capteurs embarqués dans le premier véhicule 10.

Tant que le deuxième véhicule 11 est sélectionné comme véhicule cible du système ACC, une valeur d'accélération (de consigne, de consigne brute ou potentielle) est par exemple déterminée à un instant courant 't' par le système ACC à partir d'un ensemble de données obtenues d'un ou plusieurs capteurs de détection d'objet embarqués dans le premier véhicule 10 et/ou de paramètres dynamiques du premier véhicule 10. La valeur d'accélération cible (exprimée en m.s$^{-2}$) est par exemple calculée à partir de :

- données représentatives du comportement dynamique du deuxième véhicule 11 (par exemple vitesse et/ou accélération), ces données étant par exemple obtenue à partir d'un ensemble de positions prises par le deuxième véhicule 11 sur un intervalle de temps précédant l'instant courant 't' pour lequel est déterminée l'accélération cible. Les données sur les positions prises par le deuxième véhicule 11 sont avantageusement déterminées à partir des données reçues du ou des capteurs de détection d'objet embarqués dans le premier véhicule 10 ;
- données représentatives du comportement dynamique du premier véhicule 10 (par exemple vitesse, accélération, distance vis-à-vis du deuxième véhicule 11), ces données étant obtenues de capteurs embarqués dans le premier véhicule 10, la distance étant par exemple obtenue à partir des données reçues du ou des capteurs de détection d'objet ; et/ou

- paramètres de consignes fournis au système ACC, tels que par exemple une distance ou un temps inter-véhicule (DIV ou TIV) cible, ces paramètres étant enregistrés en mémoire ou entrés par un utilisateur via une interface Homme-Machine, dite IHM.

Un processus de contrôle de l'accélération d'un véhicule, par exemple le premier véhicule 10 embarquant le système ACC, est avantageusement mis en œuvre par le véhicule 10, c'est-à-dire par un calculateur ou une combinaison de calculateurs du système embarqué du véhicule 10, par exemple par le ou les calculateurs en charge de contrôler le système ACC. A cet effet, une ou plusieurs valeurs d'accélération (potentielle ou de consigne brute) sont déterminées via les opérations ou étapes décrites ci-dessous.

Un tel processus est avantageusement mis en œuvre ou initié lors de la perte du deuxième véhicule 11 en tant que véhicule cible du système ACC du premier véhicule 10, c'est-à-dire lorsque le système ACC désélectionne le deuxième véhicule 11 comme véhicule cible, pour quelque raison que ce soit (fin de détection du deuxième véhicule 11 par les capteurs du premier véhicule 10 ou problème d'analyse des données issues de ces capteurs par exemple).

Dans une première opération, une valeur représentative d'une variation d'accélération courante, dite valeur de secousse courante, est déterminée ou calculée en fonction d'une vitesse courante V(t) du premier véhicule 10 et d'une valeur d'accélération, dite valeur d'accélération précédente A(t-dt), obtenue du système ACC à un instant 't-dt' précédant l'instant courant 't'.

La valeur de secousse à l'instant 't' est avantageusement déterminée selon une ou plusieurs fonctions de la vitesse du premier véhicule 10. La fonction reliant la valeur de secousse à la vitesse du premier véhicule correspond avantageusement à une fonction monotone croissante.

Lorsque la valeur d'accélération précédente A(t-dt) est strictement inférieure à 0 (de signe négatif avec A(t-dt)<0), la valeur de secousse est selon une première fonction (monotone croissante), notée $J1(V)$, de la vitesse V du premier véhicule 10.

Lorsque la valeur d'accélération précédente A(t-dt) est supérieure ou égale à 0 (de signe positif avec A(t-dt)≥0), la valeur de secousse est selon une deuxième fonction (monotone croissante), notée $J2(V)$ de la vitesse V du premier véhicule 10.

La figure 2 illustre un exemple d'une première fonction 21 et d'une deuxième fonction 22 entre la valeur de secousse (notée J en ordonné du diagramme 2) et la vitesse du premier véhicule 10 (notée V en abscisse du diagramme 2).

Selon l'exemple de la figure 2, la première fonction 21 comprend :

- une première partie pour laquelle la valeur de secousse (dite première valeur de secousse) correspond à une constante et est égale à une première valeur de secousse minimale, notée $J1_{min}$, pour toute vitesse V du premier véhicule 10 comprise entre 0 km/h et une première vitesse minimale, notée $V1_{min}$ ;
- une deuxième partie pour laquelle la première valeur de secousse croit au fur et à mesure que la vitesse V du premier véhicule augmente, la première valeur de secousse croissant par exemple selon une fonction linéaire pour passer de la première valeur de secousse minimale $J1_{min}$ à une première valeur de secousse maximale, notée $J1_{max}$, $(J1_{max} > J1_{min})$ pour une vitesse V comprise entre la première vitesse minimale $V1_{min}$ et une première vitesse maximale, notée $V1_{max}$, avec $V1_{max} > V1_{min}$ ; et
- une troisième partie pour laquelle la première valeur de secousse correspond à une constante et est égale à la première valeur de secousse maximale $J1_{max}$ pour toute vitesse V du premier véhicule 10 supérieure à la première vitesse maximale $V1_{max}$.

Selon l'exemple de la figure 2, la deuxième fonction 22 comprend :

- une première partie pour laquelle la valeur de secousse (dite deuxième valeur de secousse) correspond à une constante et est égale à une deuxième valeur de secousse minimale, notée $J2_{min}$, pour toute vitesse V du premier véhicule 10 comprise entre 0 km/h et une deuxième vitesse minimale, notée $V2_{min}$ ; $V2_{min}$ est par exemple supérieure à $V1_{min}$ ;
- une deuxième partie pour laquelle la deuxième valeur de secousse croit au fur et à mesure que la vitesse V du premier véhicule augmente, la deuxième valeur de secousse croissant par exemple selon une fonction linéaire pour passer de la deuxième valeur de secousse minimale $J2_{min}$ à une deuxième valeur de secousse maximale, notée $J2_{max}$, $(J2_{max} > J2_{min})$ pour une vitesse V comprise entre la deuxième vitesse minimale $V2_{min}$ et une deuxième vitesse maximale, notée $V2_{max}$, avec $V2_{max} > V2_{min}$ ; $V2_{max}$ est par exemple supérieure à $V1_{max}$ ; et
- une troisième partie pour laquelle la deuxième valeur de secousse correspond à une constante et est égale à la deuxième valeur de secousse maximale $J2_{max}$ pour toute vitesse V du premier véhicule 10 supérieure à la deuxième vitesse maximale $V2_{max}$.

La valeur de $J1_{max}$ est par exemple supérieure à la valeur de $J2_{max}$ et la valeur de $J1_{min}$ est par exemple supérieure à la valeur de $J2_{min}$.

Les paramètres $J1_{min}$, $J1_{max}$, $J2_{min}$, $J2_{max}$, $V1_{min}$, $V1_{max}$, $V2_{min}$ et $V2_{max}$ sont ajustables ou calibrables pour s'adapter au type de système ACC (par exemple silhouette, type d'actionneurs, type de capteurs), au type du premier véhicule et/ou au profil ou aux attentes du conducteur du premier véhicule.

A titre d'exemple purement illustratif, $J1_{min}$ = 1 m.s$^{-3}$ ; $J1_{max}$ = 2 m.s$^{-3}$ ; $J2_{min}$ = 0.5 m.s$^{-3}$ ; $J2_{max}$ = 1.5 m.s$^{-3}$ ; $V1_{min}$ = 3 m.s$^{-1}$ ; $V1_{max}$ = 30 m.s$^{-1}$ ; $V2_{min}$ = 5 m.s$^{-1}$ ; $V2_{max}$ = 50 m.s$^{-1}$.

Selon l'exemple de la figure 2, la variation de l'accélération permise par la première fonction 21 est ainsi plus importante que la variation de l'accélération permise par la deuxième fonction 22.

Dans une deuxième opération, une valeur d'accélération courante (à l'instant courant 't') du système ACC est déterminée en fonction de la valeur de secousse courante obtenue à la première opération en fonction de la vitesse courante du premier véhicule, selon la première fonction 21 ou la deuxième fonction 22, c'est-à-dire selon le signe positif ou négatif de l'accélération déterminée par le système ACC à l'instant précédent 't-dt'.

Le système ACC détermine par exemple une valeur d'accélération à intervalles réguliers, de durée égale à dt, par exemple égale à 50 ms. Selon d'autres exemples, dt est par exemple égal à 10, 20, 30 ou 40 ms, ou à toute valeur comprise entre 10 et 50 ms.

La valeur d'accélération A(t) du système ACC, c'est-à-dire déterminée par le système ACC et fournie en sortie du système ACC à un instant 't' est obtenue via l'équation 1 suivante :

$$A(t) = A(t-dt) + J(V)^*dt$$

Avec A(t-dt) correspondant à la valeur d'accélération obtenue par le système ACC à l'instant 't-dt' précédant l'instant 't' selon la pas temporel 'dt', J(V) correspondant à la valeur de secousse obtenue en fonction de la vitesse V du premier véhicule 10 selon la première fonction 21 (J(V) étant alors égale à J1(V) et correspondant à la première valeur de secousse) ou selon la deuxième fonction 22 (J(V) étant alors égale à J2(V) et correspondant à la deuxième valeur de secousse) et 'dt' correspondant au pas temporel ou à l'intervalle de temps entre deux déterminations successives (d'un point de vue temporel) de l'accélération par le système ACC.

Lorsque le processus débute, c'est-à-dire lorsque le système ACC du premier véhicule 10 perd le deuxième véhicule 11 et le désélectionne pour que le deuxième véhicule 11 ne soit plus le véhicule cible, la première valeur de A(t) est calculée à $t_{désélection}$+dt, avec $t_{désélection}$ correspondant à l'instant de désélection du deuxième véhicule 11 comme véhicule cible, via l'équation 1 en prenant A(t-dt) comme étant égale à la dernière valeur d'accélération déterminée par le système ACC en se basant sur le deuxième véhicule 11 comme véhicule cible, c'est-à-dire à partir de la différence de vitesse entre le premier véhicule 10 et le deuxième véhicule 11 et à partir de la distance séparant le premier véhicule 10 du deuxième véhicule 11. Les valeurs suivantes de l'accélération A(t) sont déterminées à partir de la valeur d'accélération précédente déterminée via l'équation 1.

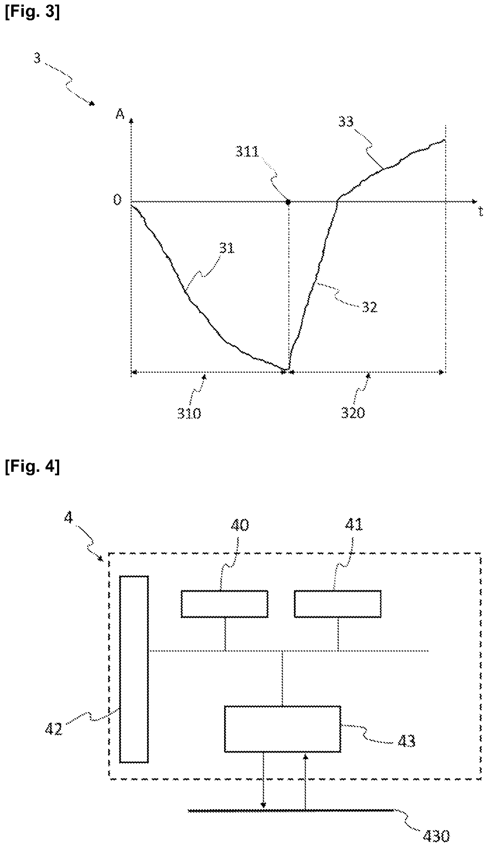

La figure 3 illustre un diagramme 3 représentant un profil d'accélération (noté A en ordonnée du diagramme 3) obtenu en sortie du système ACC du premier véhicule 10 en fonction du temps (noté t en abscisse du diagramme 3), selon un exemple de réalisation particulier et non limitatif de la présente invention.

Selon l'exemple de la figure 3, le profil d'accélération comprend une première partie 31 où l'accélération est négative (correspondant à une décélération) et décroit jusqu'à atteindre un minimum (ou maximum de décélération). Cette première partie correspond à une période temporelle 310 pendant laquelle le système ACC se base sur le deuxième véhicule 11 (qui correspond au véhicule cible du système ACC) situé devant le premier véhicule 10. Selon cet exemple, le deuxième véhicule 11 est dans une phase de décélération, ce qui entraine des valeurs d'accélération, déterminées par le système ACC, négatives pour maintenir par exemple une distance inter-véhicules déterminée. L'instant où le système ACC perd le deuxième véhicule comme objet cible est représenté par un point 311 sur la figure 3, l'instant de désélection associé du deuxième véhicule correspondant à $t_{désélection}$, avec par exemple une valeur d'accélération associée déterminée par le système ACC en fonction du deuxième véhicule 11.

Le profil d'accélération illustrée sur la figure 3 comprend également une deuxième partie 32 et une troisième partie 33 s'étalant sur une période temporelle 320. La durée de la période temporelle 320 correspond par exemple à un paramètre du système ACC et possède par exemple une durée ajustable (par exemple par le conducteur) ou fixée et stockée en mémoire du système ACC. La durée de la période temporelle 320 est par exemple égale à 2 secondes, cette période temporelle démarrant ou débutant à l'instant de désélection $t_{désélection}$ 311. Selon d'autres exemples, la durée de la période temporelle 320 est égale à 1, 1.5, 2.5, 3 ou 4 secondes.

La deuxième partie 32 fait suite temporellement à la première partie 31, les valeurs de l'accélération A formant cette deuxième partie étant déterminées par le système ACC via l'équation 1 en fonction de la première valeur de secousse J1(V) puisque les valeurs d'accélérations sont strictement inférieures à 0 m.s$^{-2}$.

Lorsque la valeur d'accélération atteint 0 m.s$^{-2}$, la troisième partie 33 du profil débute avec un profil différent de celui de la deuxième partie 32. La troisième partie 33 fait suite temporellement à la deuxième partie 32, les valeurs de l'accélération A formant cette deuxième partie étant déterminées par le système ACC via l'équation 1 en fonction de la deuxième valeur de secousse J2(V) puisque les valeurs d'accélérations sont supérieures ou égales à 0 m.s$^{-2}$. Le profil de la troisième partie 33 est différent de celui de la deuxième partie 32 en ce que la variation d'accélération entre deux valeurs d'accélération successives est moins importante qu'elle ne l'est pour deux valeurs d'accélération successives de la deuxième partie 32. Cela s'explique par le profil de la deuxième fonction 22 (de la deuxième valeur de secousse) qui est différent de celui de la première fonction 21 (de la première valeur de secousse), les valeurs minimale et maximale de la deuxième fonction 22 étant inférieures aux valeurs minimale et maximale, respectivement, de la première fonction 21.

L'accélération déterminée par le système ACC suite à la perte du véhicule cible est plus douce et avec un maximum d'accélération plus faible que ce qui serait obtenu avec un système ACC de l'art antérieur ne se basant pas sur des valeurs de secousse déterminées en fonction de la vitesse du premier véhicule 10, tel que décrit ci-dessus.

Filtrer la valeur d'accélération avec une valeur de secousse qui est fonction de la vitesse du premier véhicule 10 permet de limiter la variation d'accélération, ce qui permet d'avoir une accélération moins brutale, donc plus confortable pour les passagers. Par ailleurs, si la désélection du deuxième véhicule 11 était erronée (par exemple due à un problème des capteurs du premier véhicule 10), limiter l'accélération permet de limiter les risques de collision avec le deuxième véhicule 11 toujours localisé devant le premier véhicule 10.

Bien entendu, le profil d'accélération illustré sur la figure 3 correspond à un exemple particulier, l'invention ne se limitant pas à un tel exemple. Par exemple, la première partie 31 pourrait correspondre à une phase d'accélération positive, suivie d'une seule deuxième phase s'étalant sur toute la période temporelle 320 et déterminée à partir de l'équation 1 en fonction de la deuxième valeur de secousse J2(V).

Dans une troisième opération, l'accélération du premier véhicule 10 est contrôlée en fonction de la ou les valeurs d'accélération déterminées à la deuxième opération.

Par exemple, la ou les valeurs d'accélération déterminées à la deuxième opération et obtenues en sortie du système ACC sont utilisées comme accélération(s) de consigne pour réguler l'accélération du premier véhicule 10.

Selon une variante, la ou les valeurs d'accélération déterminées à la deuxième opération et obtenues en sortie du système ACC sont comparées à des accélérations déterminées par un autre module du système de régulation de vitesse du premier véhicule 10. Par exemple, les valeurs d'accélération obtenues en sortie du système ACC sont comparées à des valeurs d'accélération déterminées par un système de régulation de vitesse utilisant comme paramètres une vitesse de consigne (par exemple entrée par le conducteur) et la vitesse courante du premier véhicule 10. La comparaison permet de sélectionner l'accélération dont la valeur est la plus petite à un instant 't', c'est-à-dire soit l'accélération obtenue en sortie du système ACC, soit l'accélération obtenue en sortie du système de régulation de vitesse, la valeur d'accélération sélectionnée étant utilisée comme accélération de consigne pour réguler l'accélération du premier véhicule 10.

Selon une autre variante, un filtrage est appliqué à l'accélération de consigne (obtenue du système ACC ou du système de régulation de vitesse), par exemple pour limiter les variations d'accélération selon des paramètres stockés en mémoire du système de régulation d'accélération du premier véhicule 10, pour le confort des passagers par exemple.

Les première, deuxième et troisième opérations sont ainsi mises en œuvre pour déterminer à un instant courant une valeur d'accélération du système ACC après perte du véhicule cible par le système ACC.

Selon une variante de réalisation, les première, deuxième et troisième opérations sont réitérées pendant une durée déterminée (par exemple 2 secondes), par exemple à intervalles réguliers selon un pas temporel déterminé dt, par exemple égal à 50 ms. Selon cette variante, une valeur d'accélération est déterminée par le système ACC toutes les 50 ms pendant 2 secondes, à compter de l'instant où le véhicule qui correspondait jusqu'alors au véhicule cible est désélectionné comme véhicule cible du système ACC.

[Fig. 2] illustre des fonctions de la valeur de secousse C en fonction du niveau de dangerosité $N_{danger}$, selon un exemple de réalisation particulier et non limitatif de la présente invention.

La figure 2 illustre une première courbe 21 montrant les valeurs prises par la valeur de secousse $C_1$ en fonction du niveau de dangerosité (ou de criticité) $N_{danger}$, c'est-à-dire lorsque la valeur de secousse est supérieure à 0. La courbe 21 comprend par exemple 3 parties :

- une première partie où $C_1$ prend une première valeur $C_{1\_bas}$, par exemple égale à 1 m.s$^{-3}$, lorsque le niveau de dangerosité est inférieur à un premier seuil $N_{bas}$, par exemple égal à 0.2 ;
- une deuxième partie où $C_1$ correspond à une fonction linéaire croissante, $C_1$ étant compris entre la première valeur $C_{1\_bas}$ et une deuxième valeur $C_{1\_haut}$, par exemple égale à 3 m.s$^{-3}$, $C_{1\_bas}$ étant associé à $N_{bas}$ et $C_{1\_haut}$ étant associé à un deuxième seuil $N_{haut}$ du niveau de danger, par exemple égal à 0.9 ; et
- une troisième partie où $C_1$ prend la deuxième valeur $C_{1\_haut}$ lorsque le niveau de dangerosité est supérieur au deuxième seuil $N_{haut}$.

La figure 2 illustre une deuxième courbe 22 montrant les valeurs prises par la valeur de secousse $C_2$ en fonction du niveau de dangerosité (ou de criticité) $N_{danger}$, c'est-à-dire lorsque la valeur de secousse est inférieure à 0. La courbe 22 comprend par exemple 3 parties :

- une première partie où $C_2$ prend une première valeur $C_{2\_bas}$, par exemple égale à -1 m.s$^{-3}$, lorsque le

niveau de dangerosité est inférieur au premier seuil $N_{bas}$, par exemple égal à 0.2 ;

- une deuxième partie où $C_2$ correspond à une fonction linéaire décroissante, $C_2$ étant compris entre la première valeur $C_{2\_bas}$ et une deuxième valeur $C_{2\_haut}$, par exemple égale à -6 m.s$^{-3}$, $C_{2\_bas}$ étant associé à $N_{bas}$ et $C_{2\_haut}$ étant associé au deuxième seuil $N_{haut}$ du niveau de danger, par exemple égal à 0.9 ; et

- une troisième partie où $C_2$ prend la deuxième valeur $C_{2\_haut}$ lorsque le niveau de dangerosité est supérieur au deuxième seuil $N_{haut}$.

La figure 4 illustre schématiquement un dispositif 4 configuré pour contrôler l'accélération d'un véhicule, par exemple du premier véhicule 10, selon un exemple de réalisation particulier et non limitatif de la présente invention. Le dispositif 4 correspond par exemple à un dispositif embarqué dans le premier véhicule 10, par exemple un calculateur.

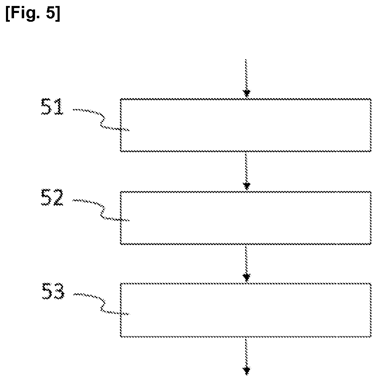

Le dispositif 4 est par exemple configuré pour la mise en œuvre des opérations décrites en regard des figures 1 à 3 et/ou des étapes du procédé décrit en regard de la figure 5. Des exemples d'un tel dispositif 4 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 4, individuellement ou en combinaison, peuvent être intégrés dans un unique circuit intégré, dans plusieurs circuits intégrés, et/ou dans des composants discrets. Le dispositif 4 peut être réalisé sous la forme de circuits électroniques ou de modules logiciels (ou informatiques) ou encore d'une combinaison de circuits électroniques et de modules logiciels.

Le dispositif 4 comprend un (ou plusieurs) processeur(s) 40 configurés pour exécuter des instructions pour la réalisation des étapes du procédé et/ou pour l'exécution des instructions du ou des logiciels embarqués dans le dispositif 4. Le processeur 40 peut inclure de la mémoire intégrée, une interface d'entrée/sortie, et différents circuits connus de l'homme du métier. Le dispositif 4 comprend en outre au moins une mémoire 41 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 41.

Selon différents exemples de réalisation particuliers et non limitatifs, le dispositif 4 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 4 comprend un bloc 42 d'éléments d'interface pour communiquer avec des dispositifs externes. Les éléments d'interface du bloc 42 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;

- interface USB (de l'anglais « Universal Serial Bus » ou « Bus Universel en Série » en français) ;

- interface HDMI (de l'anglais « High Definition Multimedia Interface », ou « Interface Multimedia Haute Definition » en français) ;

- interface LIN (de l'anglais « Local Interconnect Network », ou en français « Réseau interconnecté local »).

Des données sont par exemples chargées vers le dispositif 4 via l'interface du bloc 42 en utilisant un réseau Wi-Fi® tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 4 comprend une interface de communication 43 qui permet d'établir une communication avec d'autres dispositifs (tels que d'autres calculateurs du système embarqué) via un canal de communication 430. L'interface de communication 43 correspond par exemple à un transmetteur configuré pour transmettre et recevoir des informations et/ou des données via le canal de communication 430. L'interface de communication 43 correspond par exemple à un réseau filaire de type CAN (de l'anglais « Controller Area Network » ou en français « Réseau de contrôleurs »), CAN **FD** (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 4 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 4.

La figure 5 illustre un organigramme des différentes étapes d'un procédé de contrôle d'accélération d'un véhicule, par exemple du premier véhicule 10, selon un exemple de réalisation particulier et non limitatif de la présente invention. Le procédé est par exemple mis en œuvre par un dispositif embarqué dans le premier véhicule 10 ou par le dispositif 4 de la figure 4. Le procédé est par exemple mis en œuvre par un ou plusieurs processeurs d'un ou plusieurs calculateurs, par exemple un ou plusieurs calculateurs contrôlant le système ACC du véhicule. Le procédé est mis en œuvre suite à une désélection d'un deuxième véhicule comme véhicule cible du système ACC.

Dans une première étape 51, une valeur représentative d'une variation d'accélération courante, dite valeur de secousse courante, est déterminée en fonction d'une vitesse courante du premier véhicule et d'une valeur d'accélération, dite valeur d'accélération précédente, obtenue du système ACC à un instant précédant l'instant courant.

Dans une deuxième étape 52, une valeur d'accélération courante du système ACC est déterminée en fonction de la valeur de secousse courante et de la valeur d'accélération précédente.

Dans une troisième étape 53, l'accélération du premier véhicule est contrôlée en fonction de la valeur d'accélération courante.

Selon une variante, les variantes et exemples des opérations décrits en relation avec la figure 1, 2 et/ou 3 s'appliquent aux étapes du procédé de la figure 5.

Bien entendu, la présente invention ne se limite pas aux exemples de réalisation décrits ci-avant mais s'étend à un procédé de contrôle d'un véhicule, par exemple un véhicule autonome, qui inclurait des étapes secondaires sans pour cela sortir de la portée de la présente invention. Il en serait de même d'un dispositif configuré pour la mise en œuvre d'un tel procédé.

La présente invention concerne également un système de régulation adaptative de vitesse pour véhicule comprenant le dispositif 4 de la figure 4.

La présente invention concerne également un véhicule, par exemple automobile ou plus généralement un véhicule autonome à moteur terrestre, comprenant le dispositif 4 de la figure 4 ou le système de régulation adaptative de vitesse pour véhicule ci-dessus.

**Revendications**

1. Procédé de contrôle d'accélération d'un premier véhicule (10), ledit premier véhicule (10) comprenant un système de régulation adaptative de vitesse, dit système ACC, ledit procédé comprenant les étapes suivantes postérieures à une désélection d'un deuxième véhicule (11) comme véhicule cible dudit système ACC :

   a) détermination (51) d'une valeur représentative d'une variation d'accélération courante, dite valeur de secousse courante, en fonction d'une vitesse courante dudit premier véhicule (10) et d'une valeur d'accélération, dite valeur d'accélération précédente, obtenue dudit système ACC à un instant précédant ledit instant courant ;

   b) détermination (52) d'une valeur d'accélération courante dudit système ACC en fonction de ladite valeur de secousse courante et de ladite valeur d'accélération précédente ;

   c) contrôle (53) d'accélération dudit premier véhicule (10) en fonction de ladite valeur d'accélération courante.

2. Procédé selon la revendication 1, pour lequel ladite valeur de secousse courante correspond à :

   - une première valeur de secousse lorsque lorsque ladite valeur d'accélération précédente est strictement inférieure à 0, ladite première valeur de secousse étant selon une première fonction de la vitesse dudit premier véhicule (10) ; ou

   - une deuxième valeur de secousse lorsque lorsque ladite valeur d'accélération précédente est supérieure ou égale à 0, ladite deuxième valeur de secousse étant selon une deuxième fonction de la vitesse dudit premier véhicule (10).

3. Procédé selon la revendication 2, pour lequel ladite première valeur de secousse est :

   - égale à une première valeur de secousse minimale pour toute vitesse dudit premier véhicule (10) comprise entre 0 et une première vitesse minimale,

   - suivant une fonction croissante de la vitesse dudit premier véhicule lorsque ladite vitesse dudit premier véhicule (10) est comprise entre ladite première vitesse minimale et une première vitesse maximale dudit premier véhicule (10), ladite première vitesse maximale étant supérieure à ladite première vitesse minimale, et

   - égale à une première valeur de secousse maximale pour toute vitesse dudit premier véhicule (10) supérieure à ladite première vitesse maximale ;

   et ladite deuxième valeur de secousse est :

   - égale à une deuxième valeur de secousse minimale pour toute vitesse dudit premier véhicule (10) comprise entre 0 et une deuxième vitesse minimale, ladite deuxième valeur de secousse minimale étant inférieure à ladite première valeur de secousse minimale,

- suivant une fonction croissante de la vitesse dudit premier véhicule (10) lorsque ladite vitesse dudit premier véhicule est comprise entre ladite deuxième vitesse minimale et une deuxième vitesse maximale dudit premier véhicule (10), ladite deuxième vitesse maximale étant supérieure à ladite deuxième vitesse minimale, et

- égale à une deuxième valeur de secousse maximale pour toute vitesse dudit premier véhicule (10) supérieure à ladite deuxième vitesse maximale, ladite deuxième valeur de secousse maximale étant inférieure à ladite première valeur de secousse maximale.

4. Procédé selon la revendication 3, pour lequel ladite deuxième vitesse minimale est supérieure à ladite première vitesse minimale et ladite deuxième vitesse maximale est supérieure à ladite première vitesse maximale.

5. Procédé selon l'une des revendications 1 à 4, pour lequel ladite valeur d'accélération courante dudit système ACC vaut :

$$A(t) = A(t-dt) + J(V)*dt,$$

avec A(t) ladite valeur d'accélération courante, A(t-dt) ladite valeur d'accélération précédente, dt l'intervalle temporel séparant l'instant précédent et l'instant courant, J(V) ladite valeur de secousse fonction de la vitesse V dudit premier véhicule (10).

6. Procédé selon l'une des revendications 1 à 5, pour lequel lesdites étapes a), b) et c) sont réitérées pendant une durée déterminée à compter d'un instant temporel correspondant à ladite désélection dudit deuxième véhicule (11).

7. Procédé selon la revendication 6, pour lequel ladite durée déterminée est égale à 2 secondes.

8. Dispositif (4) de contrôle d'accélération d'un premier véhicule (10), ledit dispositif (4) comprenant une mémoire (41) associée à au moins un processeur (40) configuré pour la mise en œuvre des étapes du procédé selon l'une quelconque des revendications 1 à 7.

9. Véhicule (10) comprenant le dispositif (4) selon la revendication 8.

10. Produit programme d'ordinateur comportant des instructions adaptées pour l'exécution des étapes du procédé selon l'une des revendications 1 à 7, lorsque le programme d'ordinateur est exécuté par au moins un processeur.

**Patentansprüche**

1. Verfahren zur Beschleunigungssteuerung eines ersten Fahrzeugs (10), wobei das erste Fahrzeug (10) ein adaptives Geschwindigkeitsregelungssystem, das ACC-System, umfasst, wobei das Verfahren die folgenden Schritte nach dem Abwählen eines zweiten Fahrzeugs (11) als Zielfahrzeug des ACC-Systems umfasst:

a) Bestimmung (51) eines Wertes, der für eine Änderung der aktuellen Beschleunigung, den so genannten aktuellen Schüttelwert, repräsentativ ist, in Abhängigkeit von einer aktuellen Geschwindigkeit des ersten Fahrzeugs (10) und einem Beschleunigungswert, dem so genannten vorhergehenden Beschleunigungswert, der von dem ACC-System zu einem Zeitpunkt vor dem aktuellen Zeitpunkt erhalten wurde;
b) Bestimmung (52) eines aktuellen Beschleunigungswertes des ACC-Systems in Abhängigkeit von dem aktuellen und dem vorherigen Beschleunigungswert;
c) Beschleunigungssteuerung (53) des ersten Fahrzeugs (10) in Abhängigkeit von dem aktuellen Beschleunigungswert.

2. Verfahren nach Anspruch 1, bei dem der aktuelle Schüttelwert ist:

- einen ersten Schüttelwert, wenn der vorausgegangene Beschleunigungswert streng kleiner als 0 ist, wobei der erste Schüttelwert eine erste Funktion der Geschwindigkeit des ersten Fahrzeugs (10) ist, oder
- einen zweiten Schüttelwert, wenn der vorausgegangene Beschleunigungswert größer oder gleich 0 ist, wobei der zweite Schüttelwert gemäß einer zweiten Funktion der Geschwindigkeit des ersten Fahrzeugs (10) ist.

3. Verfahren nach Anspruch 2, wobei der erste Schüttelwert ist:

- gleich einem ersten Mindestschütterungswert für jede Geschwindigkeit des ersten Fahrzeugs (10) zwischen 0 und einer ersten Mindestgeschwindigkeit,
- einer zunehmenden Funktion der Geschwindigkeit des ersten Fahrzeugs folgt, wenn die Geschwindigkeit des ersten Fahrzeugs (10) zwischen der ersten Mindestgeschwindigkeit und einer ersten Höchstgeschwindigkeit des ersten Fahrzeugs (10) liegt, wobei die erste Höchstgeschwindigkeit größer als die erste Mindestgeschwindigkeit ist, und
- gleich einem ersten maximalen Schüttelwert für jede Geschwindigkeit des ersten Fahrzeugs (10), die größer als die erste maximale Geschwindigkeit ist;

und der zweite Schüttelwert ist:

- einem zweiten Mindestschütterwert für jede Geschwindigkeit des ersten Fahrzeugs (10) zwischen 0 und einer zweiten Mindestgeschwindigkeit entspricht, wobei der zweite Mindestschütterwert kleiner als der erste Mindestschütterwert ist,
- einer zunehmenden Funktion der Geschwindigkeit des ersten Fahrzeugs (10) folgt, wenn die Geschwindigkeit des ersten Fahrzeugs zwischen der zweiten Mindestgeschwindigkeit und einer zweiten Höchstgeschwindigkeit des ersten Fahrzeugs (10) liegt, wobei die zweite Höchstgeschwindigkeit größer als die zweite Mindestgeschwindigkeit ist, und
- gleich einem zweiten maximalen Schüttelwert für jede Geschwindigkeit des ersten Fahrzeugs (10), die größer als die zweite maximale Geschwindigkeit ist, wobei der zweite maximale Schüttelwert kleiner als der erste maximale Schüttelwert ist.

4. Verfahren nach Anspruch 3, bei dem die zweite minimale Geschwindigkeit größer als die erste minimale Geschwindigkeit und die zweite maximale Geschwindigkeit größer als die erste maximale Geschwindigkeit ist.

5. Verfahren nach einem der Ansprüche 1 bis 4, bei dem der aktuelle Beschleunigungswert des ACC-Systems gilt:

$$A(t) = A(t-dt) + J(V)*dt,$$

mit A(t) dem aktuellen Beschleunigungswert, A(t-dt) dem vorherigen Beschleunigungswert und dem Zeitintervall zwischen dem vorherigen Zeitpunkt und dem aktuellen Zeitpunkt, J(V) dem Schüttelwert in Abhängigkeit von der Geschwindigkeit V des ersten Fahrzeugs (10).

6. Verfahren nach einem der Ansprüche 1 bis 5, bei dem die Schritte a), b) und c) für eine bestimmte Zeitdauer von einem Zeitpunkt an wiederholt werden, der der Abwahl des zweiten Fahrzeugs (11) entspricht.

7. Verfahren nach Anspruch 6, bei dem die bestimmte Zeitdauer gleich 2 Sekunden ist.

8. Vorrichtung (4) zur Steuerung der Beschleunigung eines ersten Fahrzeugs (10), wobei die Vorrichtung (4) einen Speicher (41) umfasst, der mit mindestens einem Prozessor (40) verbunden ist, der zur Durchführung der Schritte des Verfahrens nach einem der Ansprüche 1 bis 7 konfiguriert ist.

9. Fahrzeug (10) mit der Vorrichtung (4) nach Anspruch 8.

10. Computerprogrammprodukt mit Anweisungen, die zur Ausführung der Schritte des Verfahrens nach einem der Ansprüche 1 bis 7 geeignet sind, wenn das Computerprogramm von mindestens einem Prozessor ausgeführt wird.

**Claims**

1. Method for controlling the acceleration of a first vehicle (10), said first vehicle (10) comprising an adaptive speed regulation system, called an ACC system, said method comprising the following steps after a deselection of a second vehicle (11) as a target vehicle of said ACC system:

a) determination (51) of a value representative of a current acceleration variation, referred to as the current shake value, as a function of a current speed of said first vehicle (10) and of an acceleration value, referred to as the previous acceleration value, obtained from said ACC system at an instant preceding said current instant;
b) determination (52) of a current acceleration value of the ACC system based on the current shake value and the previous acceleration value;
c) checking (53) the acceleration of said first vehicle (10) as a function of said current acceleration value.

2. Method according to claim 1, wherein said current shake value corresponds to:

- a first shaking value when said previous acceleration value is strictly less than 0, said first shaking value being according to a first function of the speed of said first vehicle (10); or
- second value of shaking when said previous acceleration value is greater than or equal to 0, said second value of shaking being according to a second function of the speed of said first vehicle (10).

**3.** Method according to claim 2, wherein said first shake value is:

- equal to a first minimum shaking value for any speed of said first vehicle (10) comprised between 0 and a first minimum speed,
according to an increasing function of the speed of said first vehicle when said speed of said first vehicle (10) lies between said first minimum speed and a first maximum speed of said first vehicle (10), said first maximum speed being greater than said first minimum speed, and

- equal to a first maximum shaking value for any speed of said first vehicle (10) greater than said first maximum speed;

and said second shake value is:

- equal to a second minimum shaking value for any speed of said first vehicle (10) lying between 0 and a second minimum speed, said second minimum shaking value being less than said first minimum shaking value,

according to an increasing function of the speed of said first vehicle (10) when said speed of said first vehicle lies between said second minimum speed and a second maximum speed of said first vehicle (10), said second maximum speed being greater than said second minimum speed, and
- equal to a second maximum shaking value for any speed of said first vehicle (10) greater than said second maximum speed, said second maximum shaking value being less than said first maximum shaking value.

**4.** Method according to claim 3, wherein said second minimum speed is greater than said first minimum speed and said second maximum speed is greater than said first maximum speed.

**5.** Method according to one of claims 1 to 4, for which the said current acceleration value of the said ACC system is equal to:

$$A(t) = A(t-dt) + J(V)^*dt,$$

with A(t) said current acceleration value, A(t-dt) said previous acceleration value, dt the time interval separating the previous instant and the current instant, J(V) said jolt value as a function of the speed V of said first vehicle (10).

**6.** Method according to one of claims 1 to 5, for which the said steps a), b) and c) are repeated for a determined period starting from a time instant corresponding to the said deselection of the said second vehicle (11).

**7.** Method according to claim 6, for which said determined duration is equal to 2 seconds.

**8.** Device (4) for controlling the acceleration of a first vehicle (10), said device (4) comprising a memory (41) associated with at least one processor (40) configured for implementing the steps of the method according to any one of claims 1 to 7.

**9.** Vehicle (10) comprising the device (4) according to claim 8.

**10.** A computer plan product comprising instructions adapted for executing the steps of the method according to one of claims 1 to 7, when the computer plan is executed by at least one processor.

[Fig. 1]

[Fig. 2]

[Fig. 3]

[Fig. 4]

[Fig. 5]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018237011 A1

- US 2010250087 A1